# EUROPEAN PATENT APPLICATION

(11) **EP 2 196 957 A1**
(43) Date of publication of application: **16.06.2010**
(21) Application number: 08305930.3
(22) Date of filing: 12.12.2008
(51) Int. Cl.: G06Q 30/00

(54) **Audience targeting auto-optimization system for an advertizing platform in a telecommunication network**

(71) Applicant: Alcatel Lucent, 75008 Paris (FR)
(72) Inventor: Bertoni, Yves, 78141 Velizy (FR); Senot, Christophe, 91620 Nozay (FR); Aghasaryan, Armen, 91620 Nozay (FR); Betge Brezetz, Stéphane, 91620 Nozay (FR)
(74) Representative: Hedarchet, Stéphane

(57) **Abstract**

The invention is based on a Targeting Auto-Optimizer module with provisioning, automatic learning and continuous adaptation capabilities.

## Description

The invention is related to an audience targeting auto-optimization system for an advertising platform in a telecommunication network

Advertising platforms and services allowing sophisticated targeting of various audiences and using databases of individual profiles are emerging. Today they are limited to tracking of users on the Web - but soon will embrace all personal digital advertising channels, such as IPTV, mobile portals, mobile video, MMS, SMS, etc.

More interactivity, new performance indicators and measures will allow a greater accountability of individual ads or campaigns.

As a result, a "closing the loop" feature is getting a strong requirement from marketers (Marketers are people implementing marketing policies within brands or advertising companies). It involves being able to learn from past campaigns results to continuously improve the targeting efficiency of the audiences.

Furthermore, a growing number of audiences for a large variety of products will be defined using diverse available parameters and profiling data making automatic mechanisms necessary.

To address this need, an advertising platform should be capable of automatic learning from past or current campaign results and continuous dynamic adaptation of targeted audiences.

A system and method within the advertising platform is therefore needed to automatically provision, qualify and then optimize audiences' definition of operational campaigns against business rules, consumption domain knowledge whether configured or learnt from current or past campaigns performance results.

The Google Ad-Words or Wunderloop platforms are existing solutions.

Nevertheless, they do not provide the automatic "closing-the-loop" feature. That is, they do not provide automatic learning and adjustments capabilities letting marketers manually perform this tedious task for numerous audiences.

The present invention aims at solving the above-mentioned problems.

The invention notably aims at offering a solution within a cross-media advertising platform to automatically monitor and continuously improve the audiences' definitions of marketers' or advertisers' campaigns.

The object of the present invention, according to an embodiment, is an Audience targeting auto-optimization system for an advertising platform in a telecommunication network, comprising:
- Targeted Audiences Configuration means adapted to enter an initial definition of targeted audiences of their advertising campaigns, the initial targeted audience determining a base population to be qualified by a provisioning service,
- Targeted Audiences Qualifying means adapted to validate targeted audience definitions for the campaigns, said Targeted Audiences Qualifying means acting as the audience provisioning service,
- Audiences Model & Knowledge Management means adapted to maintain the consumption domain model underpinning target audiences' definitions such as profiling attributes, their relationships or correlation rules, applied on all current or past campaigns results against their successive audiences definitions,
- Performance Assurance Management means for assuring advertising campaigns' performance through audiences' adaptations, issuing audience definition adaptation requests towards targeted audiences adaptation means,
- The Targeted Audiences Adaptation means adapted to generate diversity in the user profile attributes' definition or/and in the audience definition
- A Business rules and consumption domain configuration Graphical User Interface adapted to enter and modify business rules enabling to validate audiences' definition and adapted to initialize and modify the consumption domain model.

According to an embodiment of the invention, for adaptation, at request of the Performance Assurance Manager, the Targeted Audiences Adaptation means then instructs the Targeted Audience Qualifier to qualify the new audience definition against its business rules and then confirms the adaptation to the Performance Assurance Manager otherwise it undertakes another adaptation.

According to an embodiment of the invention, for adaptation at request of the Targeted Audiences Qualifier, the Targeted Audiences Adaptation means returns the new audience definition to the Qualifier to pursue qualification of the initial audience.

According to an embodiment of the invention, the Targeted Audiences Adaptation means provides protection against oscillations around already tried past adaptations, e.g. by using hysteresis mechanism.

By contrast to the prior art, the object of the invention, by using marketer's specific consumption domain knowledge and business rules, monitors campaigns results, issues notifications and alarms. It automatically pursues maximum performance through continuous improvement of targeting and consumption domain modeling from past or current campaigns results.

The invention is based on a Targeting Auto-Optimizer module with provisioning, automatic learning and continuous adaptation capabilities enabling:
- Marketers to specify their business rules and initial consumption domain modeling.
- Marketers to define the initial targeted audiences of their campaigns and instruct the optimizer to qualify them against the business rules and domain modeling.
- The automatic follow-up of these campaigns performance and auto-adapting of their audience definition when necessary or in an attempt to achieve better performance. Change notifications are then issued for the Marketer.
- Automatic update of the consumption domain modeling from campaigns results analysis.
- Alarms notification for the Marketer when performance remains insufficient despite several auto-adaptations.

Other objects and further features of the present invention will be apparent from the following detailed description when read in conjunction with the accompanying drawings:
Figure 1 schematically illustrates an advertising platform according to an embodiment of the invention,
Figure 2 schematically illustrates another embodiment of the invention.

A description will hereinafter be given of embodiments of the present invention, by referring to the drawings.

According to an embodiment of the invention, the latter comprises a targeting auto-optimizer 10 operating within an advertising platform 20 and responsible for:
- Automatically checking and validating targeted audiences definitions of campaigns,
- Monitoring audiences during campaigns operational life,
- Automatically adjusting audiences definitions when the desired performance against the campaign goal is not achieved or in an effort to achieve superior performance. This may require a manual acknowledgement from the marketer.
- Issuing alarms and change notification to inform marketers of poor performance or audiences' definition change.
- Maintaining the consumption domain knowledge by learning from campaigns performance against audiences' definitions changes.

The optimizer 10 is therefore equipped with automatic analysis, diversity generation and learning capabilities.

The optimizer 10 interacts with the advertiser-marketer with Graphical User Interface, takes into account performance metrics provided by marketing probes (which are not described in the present application as not in the scope of the invention) of the advertising platform, issues optimized audiences' definitions for campaigns.

The optimizer issues alarms, change notifications or approval requests towards advertiser-marketers through the GUI when audiences' definitions are adjusted or in case of insufficient performance.

The Targeted Audiences Optimizer 10 comprises the following modules:
- A Targeted Audiences Configuration GUI [1]:
   This GUI enables marketers to enter the initial definition of targeted audiences of their advertising campaigns. An initial targeted audience determines a base population to be qualified by the provisioning service and is stored in an Initial targeted audiences definitions Database 11.
   This GUI also enables to visualize and modify them during the campaigns operational lifecycle.
- A Targeted Audiences Qualifier [2]:
   This qualifying module 2 is responsible for validating targeted audience definitions for campaigns stored in an operational targeted audiences definitions database 21. The Targeted Audiences Qualifier 2 acts as the audience provisioning service. For a given campaign,
      1) A significant sample of consumers belonging to the base population is selected and exposed to the campaign.
      2) Consumers are then scored according to their propensity to respond thanks to the campaign performance results. The Qualifier 2 then instructs an "Audiences Model & Knowledge Manager" 3 to check and possibly refresh its modeling data based on the results.
      3) The qualifier 2 confirms, refines, tests again if necessary the targeted audience definition by using a combination of:
         - Business rules defining for instance the desired ratio yield against advertising cost, or the minimum overall audience size for the campaign.
         - Possibly the Audience adaptation service provided by a Targeting Audiences Adapter 5 hereinafter described.
         - Current campaigns performance results provided by the marketing probes of the advertising platform infrastructure, those being stored in a Current Campaign states and performance database 12.
   The qualifier 2 issues a validated target audience definition.
- An Audiences Model and Knowledge Manager [3]:
   This management module 3 maintains the consumption domain model underpinning target audiences' definitions such as profiling attributes, their relationships or correlation rules and any other useful information such as certainty degrees or contextual constraints.
   The Audiences Model and Knowledge Manager 3 uses any modeling techniques such as fuzzy ontologies and automatically maintains its model by using Data-Mining techniques applied on all current or past campaigns results against their successive audiences definitions.
- A Performance Assurance Manager [4]:
   This Performance Assurance Management module 4 ensures that the marketing performance of campaigns is maximized as far as possible through audiences' adaptations.
      - When consumers of a targeted population insufficiently respond to the advertising campaign (e.g. due to consumers' behavior unexpected change) or simply in an attempt to achieve better performance, it issues audience definition adaptation requests towards the targeted audiences auto-adapter module, possibly after requesting a manual approval from the advertiser-marketer.
      - When consumers of a targeted audience still insufficiently respond after a maximum number of adaptations, it issues an alarm for the advertiser-marketer.
      - When receiving an adaptation indication from the Adapter module, it issues an audience definition change notification towards the advertiser-marketer.

Furthermore, the module 4 also observes the result of successive adaptations. In case of unsuccessful adaptation leading to a poorer performance, it may issue a rollback request towards the auto-adapter module 5.

### - A Targeted Audiences Adapter [5]:

This module 5 is responsible for changing the campaign audience definition. Its interface enables:
- The Performance Assurance Manager to request an adaptation of the current audience definition.
- The Targeted Audience Qualifier to request an adaptation of the initial audience definition during provisioning.

This Targeted Audiences Adapter 5 performs the following functions:
- By using the consumption domain knowledge (e.g. learnt or configured relationships or correlation rules between concepts used in the audiences' definitions), it may introduce diversity by using new user profile attributes in the definition.
- It may also adjust value ranges used in the definition or use random changes to generate diversity in the audience definition
- For adaptation at request of the Performance Assurance Manager, it then instructs the Targeted Audience Qualifier to qualify the new audience definition against its business rules and then confirms the adaptation to the Performance Assurance Manager otherwise it undertakes another adaptation.
- For adaptation at request of the Targeted Audiences Qualifier, it returns the new audience definition to the Qualifier to pursue qualification of the initial audience.
- It provides protection against oscillations around already tried past adaptations (e.g. by using hysteresis mechanism).
- For instance, extend the targeted interval for an interest or for certain demographics profiling data.
- A Business rules and consumption domain configuration GUI [6]:

This Business rules and consumption domain configuration GUI 6 enables marketers to enter and modify business rules enabling to validate audiences' definition. This GUI also enables to initialize and modify the consumption domain model (concepts, relationships, correlation rules, weights, contextual constraints, etc).
- For instance, typical business rules may be a desired ratio yield against advertising cost, or a minimum overall audience size for the campaign.

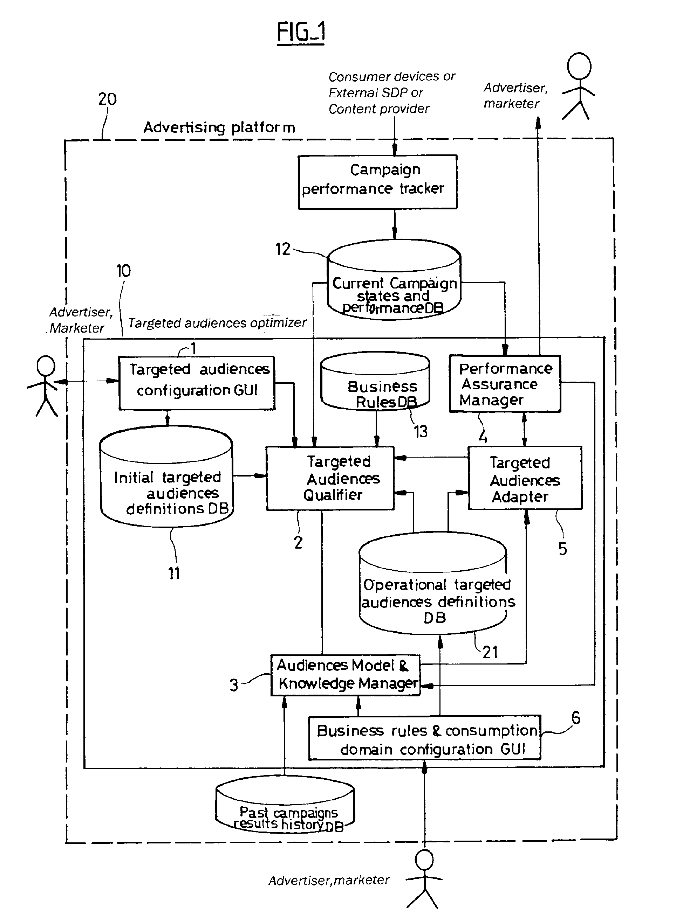

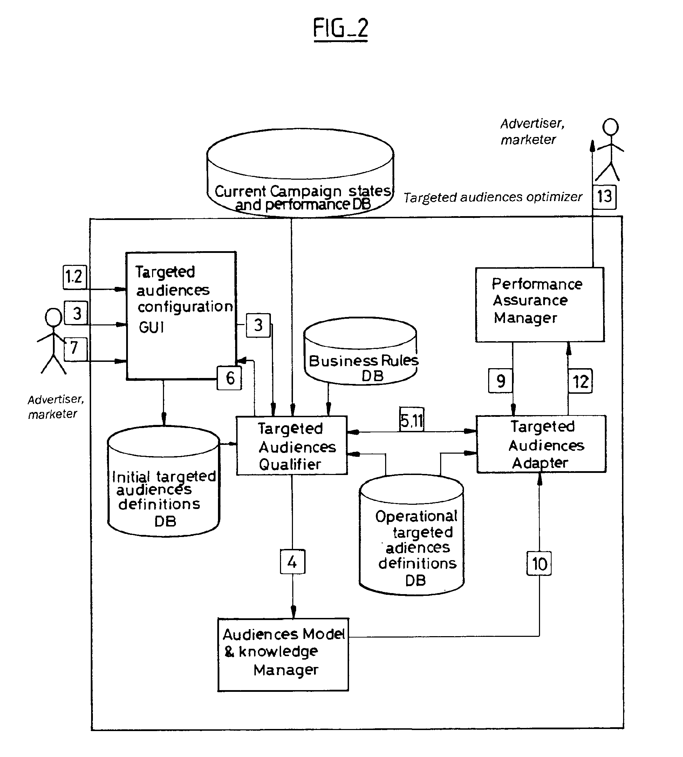

Hereafter is an example of basic scenario for a given campaign and advertiser. The different steps below are represented in the figure 2 within the white boxes. It should be clear that the references in the white boxes of the figure 2 be not mixed up with the references in the figure 1.
1) The marketer defines the targeted audience of a campaign through its GUI.
2) The marketer configures the Business Rules (stored in the business Rules Database 13) and consumption domain Modeling in the DB that will be used to qualify and adjust the audience definition.
3) The marketer instructs the Optimizer to qualify the audience definition against the business rules and consumption domain modeling.
4) The Targeted Audience Qualifier instructs the Audiences Model & Knowledge Manager to refine its modeling based on the first results of the campaign against the sample audience. This module discovers that certain consumers respond better the campaign and refines its modeling data.
   For example, best responding consumers belong to a certain age category or show an interest for a topic.
5) The Targeted Audience Qualifier then instructs the Targeted Audience Adapter to alter the audience definition accordingly. The Adapter modifies the audience definition.
6) The Qualifier checks the compliancy with the business rules and the initial audience provisioning service is completed.

These exchanges are detailed in the figures.
7) The marketer then unlocks the campaign making it operational within the advertising platform.
8) During the campaign operational life, the Performance Assurance Manager detects that the campaign performs lower and lower after a couple of weeks although it is still in line with its minimal objective.
9) It instructs the Targeted Audience Adapter to find a new definition in an attempt to achieve better performance.
10) The Adapter by using contextually constrained correlation rules between concepts of the "Audiences Model & Knowledge Manager" refines targeting of the campaign by adding new profiling attributes in the audience definition.
11) The Targeted Audiences Qualifier verifies that the newly targeted population still complies with the business rules.
12) The Targeted Audience Adapter then informs the Performance Assurance Manager of the adaptation success.
13) An audience definition change notification is then issued for the Marketer.

Hereinafter is another example of scenario for a given campaign and advertiser.
1) A campaign performs badly despite several successive adaptations trying to restore its efficiency.
2) The Performance Assurance Manager issues an alarm destined at the marketer.
3) The marketer may then lock the campaign to remove it from the operational service and perform any off-line useful action (e.g. modifying manually the audience after study of past results, bringing new campaigns, etc).

The means above-mentioned and the related steps may be at least partially or entirely performed by a computer program product.

### The benefits of the invention are the followings:

The invention allows dynamic optimizing of targeted audiences definitions of campaigns throughout their lifecycle.

It enables:
1) Initial provisioning service including a test and validation procedure.
2) Then automatic adaptation and optimization against campaign performance metrics, business rules, consumption domain knowledge whether learnt or configured.
3) The marketer is notified with the audiences' definition changes or alarms in case of persistent insufficient performance.

## Claims

1. Audience targeting auto-optimization system for an advertising platform in a telecommunication network, comprising:
- Targeted Audiences Configuration means (1) adapted to enter an initial definition of targeted audiences of their advertising campaigns, the initial targeted audience determining a base population to be qualified by a provisioning service,
- Targeted Audiences Qualifying means (2) adapted to validate targeted audience definitions for the campaigns, said Targeted Audiences Qualifying means acting as the audience provisioning service,
- Audiences Model & Knowledge Management means (3) adapted to maintain the consumption domain model underpinning target audiences' definitions such as profiling attributes, their relationships or correlation rules, applied on all current or past campaigns results against their successive audiences definitions,
- Performance Assurance Management means (4) for assuring advertising campaigns' performance through audiences' adaptations, issuing audience definition adaptation requests towards targeted audiences adaptation means (5),
- The Targeted Audiences Adaptation means (5) adapted to generate diversity in the user profile attributes' definition or/and in the audience definition
- A Business rules and consumption domain configuration Graphical User Interface (6) adapted to enter and modify business rules enabling to validate audiences' definition and adapted to initialize and modify the consumption domain model.

2. System according to claim 1, **characterized in that**, for adaptation, at request of the Performance Assurance Manager, the Targeted Audiences Adaptation means (5) then instructs the Targeted Audience Qualifier to qualify the new audience definition against its business rules and then confirms the adaptation to the Performance Assurance Manager otherwise it undertakes another adaptation.

3. System according to claim 1 or 2, **characterized in that**, for adaptation at request of the Targeted Audiences Qualifier, the Targeted Audiences Adaptation means (5) returns the new audience definition to the Qualifier to pursue qualification of the initial audience.

4. System according to any of claims 1 to 3, **characterized in that**, the Targeted Audiences Adaptation means (5) provides protection against oscillations around already tried past adaptations, e.g. by using hysteresis mechanism.
